# EUROPEAN PATENT APPLICATION

(11) **EP 1 583 050 A1**
(43) Date of publication of application: **05.10.2005**
(21) Application number: 04009234.8
(22) Date of filing: 19.04.2004
(51) Int. Cl.: G07F 7/02, G07G 1/00

(54) **Smart-Cart with RFID scanner**

(30) Priority: 30.03.2004 EP 04007684
(71) Applicant: Precisa Instruments AG, 8953 Dietikon (CH)
(72) Inventor: Bühler, René, c/o Precisa Instruments AG, 8953 - Dietikon (CH); Huber, Rudolf, c/o Precisa Instruments AG, 8953 - Dietikon (CH); Heijnen, Ludovicus, Precisa Instruments, 8953 - Dietikon (CH)
(74) Representative: Rupp, Christian

(57) **Abstract**

A system for tracking the placing/removing of goods in a mobile container (1), comprising:
- goods (3) respectively provided with an RFID tag (4),
- at least one shopping container (1) being provided with a RFID scanner unit (2) for reading RFID tags (4) being placed and/or removed into/from the container (1), the container (1) furthermore having a transmitter unit (7) operatively connected to the RFID scanner (2), and
- a stationary central unit (9) outside the container (1) for receiving signals from the transmitter unit.

## Description

The present invention generally relates to smart containers, i.e. containers such as shopping carts or shopping baskets being provided with a scanner for RFID tags (chips).

The background of the present invention can be taken for example from the articles "RFID System for Enhanced Shopping Experiences" of Walter Reade and Jeff Lindsay, published on December 23, 2003 on IP.com as Art. 21115D as well as the Art. "Retail RFID Systems without Smart Shelves" of Lindsay, Reade and Roth as published on December 23, 2003 on IP.com as Art. 21114D.

As described in these articles, in retail stores and other environments, the inability to rapidly locate items is a common problem. Retailers may appear to be out of stock for product, where in fact the product may be available in the back of the store or may have been placed on the wrong shelve. RFID (radio frequency identification) technology has been proposed as a means to improve the ability to track inventory and to locate objects. In particular, the use of RFID tracked objects coupled with smart shelves that include RFID readers has been proposed as a means of efficiently tracking the presence of products in the retail environment. However, the smart shelves that have been demonstrated in public have employed numerous expensive RFID readers adapted to read sections of a single shelve, and have required the user of expensive and bulky co-axial cable for each of the readers.

The disclosure of the two cited articles is hereby incorporated by reference as far as it regards the sections "RFID basics" in article No. 21115D, the section "antenna systems for RFID systems" and "RFID basics" in article No. 21114D. All of the RFID tags and scanning systems (antennas etc.) explained in these articles can be used in conjunction with the present invention.

The present invention targets at a further improvement of smart shopping enabled by such a smart container (smart cart) provided with a RFID scanner.

Said object is achieved by means of the features of the independent claims. The dependent claims develop further the central idea of the present invention.

According to a first aspect of the present invention, a system for tracking the placing/removing of goods in a mobile container is provided. The goods thereby are respectively associated with a RFID tag (chip). For the definition of "RFID tag" reference is made to the two articles of Lindsay, et al. acknowledged in the opening section of the present specification. At least one shopping container thereby can be provided with a RFID scanner unit for reading RFID tags being placed and/or removed into/from the container. Regarding the "RFID scanner unit" or "RFID antenna", again, reference is explicitly made to the two documents of Lindsay et al., mentioned in the opening section of the present specification.

The container furthermore comprises a transmitter unit operatively connected to the RFID scanner. Finally, the system comprises a stationary central unit outside the container for receiving signals from the transmitter unit.

The mobile container can be provided with a display. The content of the display can be controllable depending on the result of the reading of a RFID tag.

The content information of the display thereby can be for example supplied from a local memory and/or wireless supplied from the central unit.

The central unit can comprise a wireless receiver.

The central unit can be designed to track essentially on-line the insertion/removal of goods in case the corresponding processed RFID reading signals are instantaneously transmitted to the central unit.

According to a further aspect of the present invention a mobile container having an opening for placing and removing goods into/from the container. The container thereby is provided with at least one container for reading RFID tags by scanning the volume and/or the region in the neighborhood of the opening. The container can further comprise a display as well as a controller for processing output signals from the antenna and controlling the content of the display directly or indirectly in response to the reading of an RFID tag. "Directly" in the present context means that the controller is processing the output signals and the content of the display is directly controlled and triggered by a controller without interaction with a third element. "Indirectly" means that the controller at first processes the output signal of the antenna, then communicates with a remote unit (such as the central unit), is supplied with instructions/content information from the remote unit and is then controlling the content of the display as instructed by the remote unit.

The controller can process the output signals from the antenna in order to identify the presence and/or nature RF identification tags having been placed and/or removed from the container.

The controller can be operatively connected to a memory for storing the time of placing and/or removing a RF identification tag.

The controller can be designed to transmit wirelessly or in physical contact the nature of identified RF identification tags to a receiver unit outside the container.

The antenna can be a surface reading antenna or a antenna reading a three-dimensional space.

The antenna can be provided at the edges of the opening of the container.

At least two antenna can be provided in an opposing arrangement, for example on the edges of the opening.

The antenna can be arranged such that the plane defined by the opening of the container essentially is the center plane of the reading area of the antenna.

The antenna can be arranged such that the reading area is at least the volume of the container.

The antenna can be arranged such that the reading area is at least the volume of the container plus an additional area surrounding the opening of the container and extending outside the plane defined by the opening.

According to a further aspect of the present invention a mobile shopping cart having an opening for placing and removing goods into/from a basket of the cart provided. The cart thereby can be provided with an antenna for detecting RF identification tags by scanning the volume and/or the region in the neighborhood of the opening, and a display, the content of which is controllable in response to the reading of a RFID tag.

Again, the control of the display can depend directly or indirectly on the reading of a RFID tag.

According to a further aspect of the present invention a method for detecting the placing and/or removing of goods into/from a mobile container is provided. At first, the goods to be detected are provided with RFID tags. A container is provided with at least one antenna for reading the RFID tags. The placing/removing of goods into/from the mobile container can be detected by reading the associated RFID tags for a means of said antenna. Thereby, the content of the display associated with the container or at a remote side can be changed in response to the reading of the RFID tag.

The method can furthermore comprise the steps of processing the output signal of the antenna in order to detect a nature of any read RFID tag and wirelessly transmitting the process signal to a central unit outside the container.

The central (receiving) unit can be operatively connected to a check-out terminal.

Again, according to a further aspect of the present invention, a method for detecting the placing and/or removing of goods into/from a shopping cart is proposed. The goods to be detected are provided with RFID chips. The shopping cart is provided with at least one antenna for reading the RFID chips. The placing/removing of goods can be detected by reading the associated RFID chips by means of said antenna. Finally, the content of a display of the shopping cart or of a remote side can be controlled directly or indirectly in response to the reading of a RFID chip.

Finally, the present invention proposes a computer software program product implementing a method as said forth above when run on a computing device.

Further advantages, features and objects of the present invention can now be explained with reference to the figures of the enclosed drawings taken in conjunction with the following detailed description of preferred embodiments of the present invention.
Fig. 1 shows a schematical overview of a system for tracking the placing/removing of goods into/from a mobile container according to the present invention,
Fig. 2 shows in detail the arrangement of a RFID scanner (antenna system) on a mobile container such as for example a mobile smart cart (trolley), and
Fig. 3 shows a flowchart of a process for tracking the shopping according to the present invention.

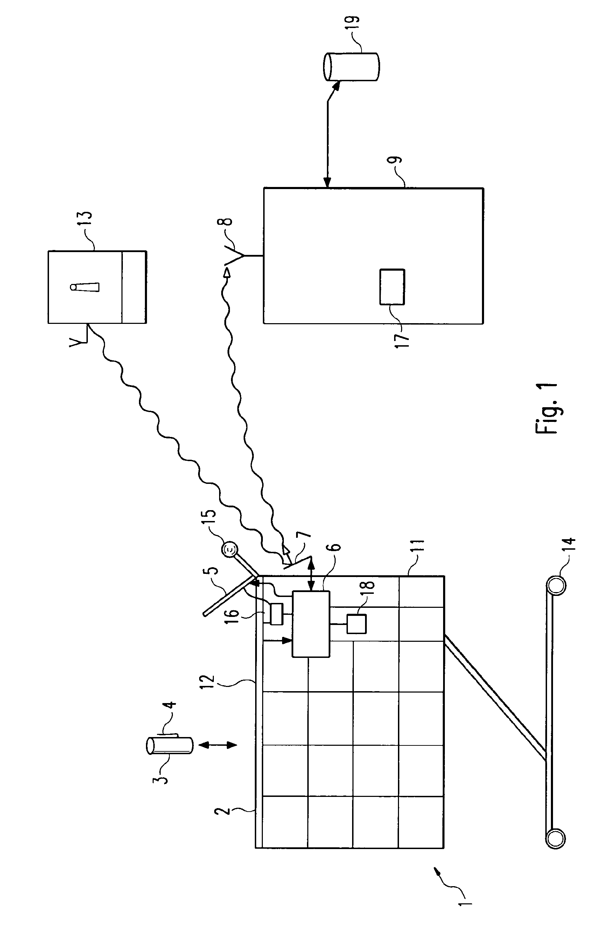

As shown in Fig. 1, a system according to the present invention comprises a mobile container such as for example a smart cart (trolley 1) having known elements such as for example the basket 11, wheels 14 and a handlebar 15.

Furtheron, the shopping cart 1 according to the present invention is provided with a RFID scanner (antenna system) 2 reading RFID tags (chips) 4 which are attached to goods 3 which are placed into or removed from the basket 11 of the mobile container 1. As schematically shown in Fig. 1 the RFID scanner 2 can advantageously by arranged in the region of the opening 12 of the basket 11 of the smart shopping cart (trolley) 1.

As an example, a directed surface RFID scanner can read the RFID tags of all items (goods) that are being put into the cart or basket during the shopping process.

All kinds of known passive and/or active RFID tags can be used in conjunction with the present invention.

The output signals of the RFID scanner 2 are supplied to a controller 6. The controller 6 is processing the output signals from the RFID scanner 2. Furthermore, the controller 6 is operatively connected to a wireless transmission/receiver unit 7 with an interface functionality. For example, the wireless interface 7 can be operated according to a wireless LAN (W-LAN) standard.

Furthermore, the controller 6 is controlling the status and content of a (for example flat screen) display 5 attached to (for example the basket 11 of) the mobile container 1 such that a user carrying or pushing the mobile container 1 can read information from the display 5.

The mobile container 1 can furthermore be provided with a power supply unit 16 (such as for example a battery pack or accumulators) to supply power to the controller 6, the RFID scanner 2, the RF interface 7 and/or the display 5. The power supply unit can be autonomous e.g. by being connected to solar panels mounted on the cart or by being connected to a generator converting the momentum of the cart into electrical power.

Via the wireless interface 7, the mobile container 1 can exchanged instructions and content data with a central unit 9 which is also provided with the corresponding RF receiver/transmitter unit 8.

Furthermore, the mobile container 1 can exchanged data with a remote display unit 13.

Via the RFID scanner unit 2, the controller 6 of the mobile cart 1 can register the placing and/or removing of goods 3 provided with RFID tags 4 into/from the basket 11 of the mobile container 1. Such an event can for example be stored in a local memory 18 operatively connected to the controller 7 and being part of the mobile container 1. In the local memory 18 therefore the time and nature of goods 3 identified via the reading of the associated RFID tags 4 by means of the RFID scanner 2 can be stored. Note that these data cannot only be stored in the local memory 18 of the mobile container 1, but can additionally or alternatively be transmitted to the central unit 9 having also a storage unit 17.

In case the event of inserting or removing goods 3 provided with a RFID tag 4 is more or less instantaneously wirelessly transmitted to the central unit 9, the central unit 9 can track essentially on-line the placing/removing of goods 3 into the basket 11 of the mobile container 1. Therefore, when a user is using such a mobile cart 1 for shopping for example in a supermarket, the central unit 9 of the supermarket can track on-line the shopping behavior of the user and can use this information for profiling and/or billing purposes. The path taken by the user of a smart cart in a shop can thus be tracked and evaluated for merchandising or advertising purposes. The lay-out of a shop, i.e. the arrangement of goods in the aisles of a shop can also be optimized based on the analyses of the tracked path of carts.

Finally, the information received by the central unit can be supplied to a ERP software e.g. to avoid out-of-stock problems.

Once the user of such a smart mobile container 1 has finished the shopping and goes to the checkout terminal, the central unit 9 of the shop has already set up the billing account of the user and the payment can be carried out for example by the user presenting an identification card at a checkout terminal. However, it is no longer necessary that a scanning of RFID tags is carried out during a checkout procedure as such scanning and tracking of the purchased goods 3 is carried out on-line immediately upon placing the corresponding goods 3 into the mobile container 1.

The tracking of the placing/removing of goods 3 being associated with RFID chips 4 into/from the basket 11 of the mobile container 1 can also be used to instantaneously display corresponding advertised information either on the local display 5 being attached to the mobile container 1 and/or a remote monitor 13.

Thereby, both indirect and direct control of the displays 5, 13 can be carried out upon detection (reading) of placing/removing a good 3 being associated with RFID chips from/into the container 1.

In case of a direct control of the content of the display of the monitors 5, 13, the local controller 6 autonomously controls the content of the display 5 or the monitor 13 upon reading of the placing/removal of the corresponding goods 3 into/from the container 1.

Alternatively or additionally a indirect control of the displays 5, 13 can be carried out as follows:
Via the RF interface 7 the controller 6 can notify the central unit 9 on an event, i.e. the nature of a removed/placed good 3. The central unit 9 is operatively connected to a database 19 in which for example advertisement information associate with the corresponding ID of the goods 3 can be provided. In response of being notified of such an event, the central unit 9 can query the database 19 and send (wirelessly) advertisement data to the controller 6, which advertisement data can than be displayed on the local display 5 or the remote monitor 13.

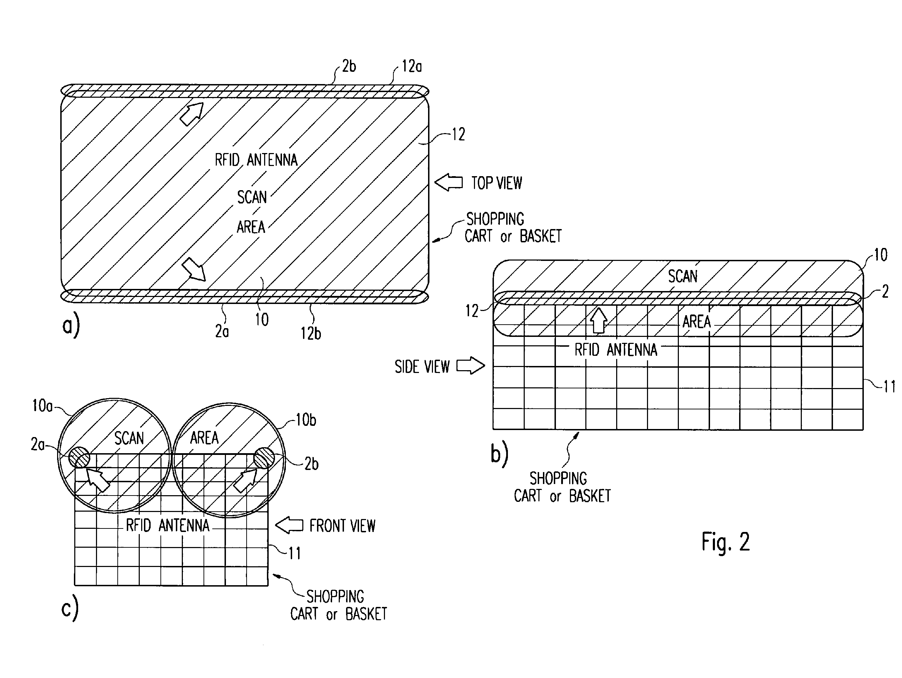

Now coming to figure 2, particularly advantageous arrangements of the antenna/scanner elements will be explained. As shown in Fig. 2a the scan area (reading area) of antenna elements 2a, 2b can be defined roughly in the plane of the opening 12 of the mobile container 1. As shown in Fig. 2a this RFID scanner can comprise two antenna subelements 2a, 2b which are arranged on opposing edges 12a, 12b of the opening 12.

As shown in Fig. 2b, the scan area can be for example a three-dimensional space the center plane of which essentially corresponds to the plane of the opening 12 of the mobile container 1. It is worst-well to note that the scan area 10 can comprise a part which extends outside the opening 12 of the container 1.

Additionally, the scan area can penetrate into the volume of the container 1 and can even cover the entire volume of said container 1.

As shown in Fig. 2c, the two antenna subelements 2a, 2b can have respective scan areas 10a, 10b which together form the scan area 10.

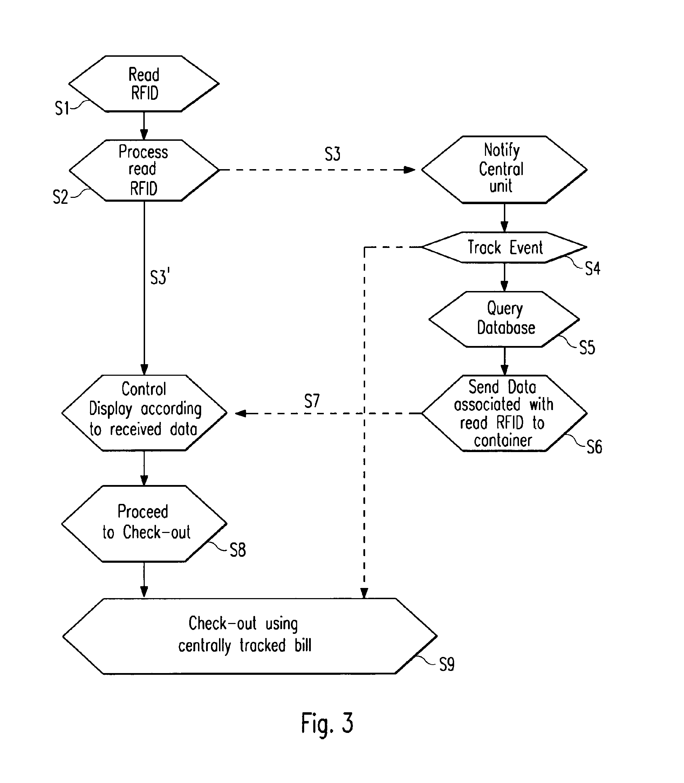

A process for tracking the shopping behavior of a client and for checking-out will now be explained with reference to figure 3.

In a step S1 the RFID scanner reads a RFID tag placed into or removed from a shopping cart or shopping basket (or any other suited mobile container). In a step S2 the read RFID is processed as in a step S3 this info can be wirelessly (e.g. WLAN) transmitted to the central unit (back office). In a step S4 the central unit can thus track essentially on-line the shopping behavior shown by a client in a shop. This tracking can be used for billing/check-out purposes and can also be further evaluated to track e.g. the typical path of a client in a shop in order to optimize the distribution of goods in the different shelves of the shop.

The central unit (server) can be connected to a ERP system providing a life update of the shopping process.

The account of the user is thus set-up electronically and essentially on-line with placing goods in the shopping cart instead of registering the purchased goods only later at the moment of checking-out at a terminal.

In a step S5 the central unit can query a database in order to retrieve (price, advertisement etc.) information associated with a certain RFID 8and thus with certain goods) in order to wirelessly transmit in a step S6 this associated information to the controller of the shopping cart or basket. The controller of the shopping cart or basket can then control the status and/or the audio and/or visual content of a local multimedia display (attached to the cart or basket) and/or a remote monitor.

Additionally or alternatively to the "indirect control" of the display, i.e. a control involving a third (remote) tier such as e.g. the central unit, and involving steps S3 to S7, step S3' shows a "direct control" in which the controller of the shopping cart or basket, triggered by the event of reading a certain RFID, controls the display without using a remote unit. Note that in both cases (direct or indirect control) the controller can use local resources such as e.g. a local memory (containing e.g. advertisement information associated with a RFID), i.e. a memory provided at the shopping cart or basket.

In a step S8 the user proceeds to check-out. In a step S9 the centrally tracked account is used. Thereby, when the client arrives at an automated checkout counter that is equipped with e.g. a touch screen device, the RFID reader of the smart mobile container (cart, basket etc.) can detect a client identification (e.g. the client can present his own RFID tag or manually enter an identification number). At this moment the total shopping list is presented on the screen of the automated check-out counter and depending on the clients' profile, a number of payment methods will be offered to the client.

## Claims

1. A system for tracking the placing/removing of goods in a mobile container (1), comprising:
- goods (3) respectively provided with an RFID tag (4),
- at least one shopping container (1) being provided with a RFID scanner unit (2) for reading RFID tags (4) being placed and/or removed into/from the container (1), the container (1) furthermore having a transmitter unit (7) operatively connected to the RFID scanner (2), and
- a stationary central unit (9) outside the container (1) for receiving signals from the transmitter unit.

2. A system according according to claim 1,
**characterized in that**
the mobile container (1) is furthermore provided with a display (5).

3. A system according to claim 2,
**characterized in that**
the content of the display (5) is controllable depending on the result of the reading of a RFID tag (4).

4. A system according to claim 3,
**characterized in that**
the content info of the display (5) is supplied from a local memory and/or wirelessly from the central unit (9).

5. A system according to anyone of the preceding claims,
**characterized in that**
the central unit (9) comprises a wireless receiver (8).

6. A system according to any of the preceding claims,
**characterized in that**
the central unit is designed to track essentially on-line the insertion/removal of goods.

7. A mobile container having an opening for placing and removing goods into/from the container, the container being provided with
- at least one antenna for reading RFID tags by scanning the volume and/or the region in the neighborhood of the opening (12),
- a display (5),
- a controller for processing output signals from the antenna and controlling the content of the display in response to the reading of an RFID tag.

8. A mobile container according to claim 7,
**characterized in that**
the controller processes the output signals from the antenna in order to identify the presence and nature of RFID tags having been placed and/or removed from the container.

9. A mobile container according to claim 7 or 8,
**characterized in that**
the controller is operatively connected to a memory for storing the time of placing and/or removing of a RFID tag.

10. A mobile container according to anyone of claims 7 to 9,
**characterized in that**
the controller is designed to transmit wirelessly or in physical contact the nature of identified RFID tags to a receiver unit outside the container.

11. A mobile container according to any claims 7 to 10,
**characterized in that**
the antenna is a surface reading antenna.

12. A mobile container according to any of claims 7 to 10,
**characterized in that**
the antenna is reading a three-dimensional space.

13. A mobile container according to anyone of claims 7 to 12,
**characterized in that**
the antenna is provided at the edges of the opening.

14. A mobile container according to anyone of claims 7 to 13,
**characterized in that**
at least two antennas are provided in an opposing arrangement.

15. A mobile container according to any of claims 7 to 14,
**characterized in that**
the antenna is arranged such that the plane defined by the opening of the container essentially is the center plane of the reading area of the antenna.

16. A mobile container according to any of claims 7 to 15,
**characterized in that**
the antenna is arranged such that the reading area is at least the volume of the container.

17. A mobile container according to claim 16,
**characterized in that**
the antenna is arranged such that the reading area is at least the volume of the container plus an additional area surrounding the opening of the container and extending outside the plane defined by the opening.

18. A mobile shopping cart having an opening for placing and removing goods into/from a basket of the cart,
the cart being provided with
- an antenna for detecting RF identification tags by scanning the volume and/or the region in the neighborhood of the opening, and
- a display the content of which is controllable in response to the reading of a RFID tag.

19. A method for detecting the placing and/or removing of goods into/from a mobile container,
the method comprising the following steps:
- providing the goods to be detected with RFID chips,
- providing a container with at least one antenna for reading the RFID chips, and
- detecting the placing/removing of goods by reading the associated RFID chips by means of said antenna, and
- changing the content of a display on the container or at a remote side (13) in response to the reading of a RFID tag.

20. A method according to claim 19,
**characterized by** the steps of
- processing the output signal of the antenna in order to detect the nature of any read RFID tag, and
- wirelessly transmitting the processed signal to a central unit outside the container.

21. A method according to claim 20,
**characterized in that**
the central receiving unit is operatively connected to a check-out terminal.

22. A method for detecting the placing and/or removing of goods into/from a shopping cart,
the method comprising the following steps:
- providing the goods to be detected with RFID chips,
- providing a shopping cart with at least one antenna for reading the RFID chips,
- detecting the placing/removing of goods by reading the associated RFID chips by means of said antenna, and
- controlling the content of a display of the shopping cart, or of a remote side (13) in response to the reading of a RFID chip.

23. Computer software program product, implementing a method according to claims 19 to 22 when run on a computing device.
